# FASCICULE DE BREVET EUROPEEN

(11) **EP 3 158 267 B1**
(45) Date de publication et mention de la délivrance du brevet: **22.04.2020**
(21) Numéro de dépôt: 16738687.9
(22) Date de dépôt: 24.06.2016
(51) Int. Cl.: F23B 80/02

(54) **GAINE D'ALIMENTATION POUR POÊLE**
ZULEITUNGSROHR FÜR OFEN
SUPPLY DUCT FOR STOVE

(30) Priorité: 24.06.2015 EP 15305980
(43) Date de publication de la demande: 26.04.2017
(73) Titulaire: Invicta Group, 08350 Donchery (FR)
(72) Inventeur: POSTEL, Serge, 08090 Saint Laurent (FR)
(74) Mandataire: Osha Liang
(86) Numéro de dépôt international: PCT/EP2016/064741
(87) Numéro de publication internationale: WO 2016/207395

(56) Documents cités:
- EP-A- 0 192 502
- EP-A1- 0 192 502
- DE-U1-202010 016 404
- US-A- 4 270 895
- US-A- 4 712 515
- US-A1- 2011 247 603

## Description

### DOMAINE TECHNIQUE

Le présent exposé concerne le domaine des poêles à combustible solide et, plus particulièrement, le domaine des poêles à granulés.

### ARRIERE PLAN

Les poêles à granulés connaissent un large succès. Les granulés, en anglais "pellets", sont appréciés notamment pour leur côté pratique (ils sont faciles à stocker, à manipuler, etc.). Ces granulés sont souvent faits de matériaux naturels compactés, comme du bois ou des résidus de plante.

Conventionnellement, les poêles à granulés se présentent sous la forme d'un seul bloc comprenant une trémie de stockage de granulés, un corps de chauffe renfermant le foyer du poêle, et un conduit d'alimentation s'étendant de la trémie jusqu'au foyer. La trémie de stockage permet d'alimenter le foyer en granulés, via le conduit d'alimentation. Le corps de chauffe est réalisé, par exemple, en fonte. La trémie, le corps de chauffe, le conduit et les autres éléments du poêle, à l'exception du conduit d'évacuation des fumées, sont regroupés en un bloc et entourés d'un habillage. Des exemples de poêles à granulés de ce type sont décrits dans les documents de brevet US 2014/0373827 A1, US 4941414 et US 5983885 A. Bien que satisfaisants, ces poêles présentent certains inconvénients.

D'abord, une partie de la chaleur émise par rayonnement par le corps de chauffe reste prisonnière à l'intérieur de l'habillage qui entoure l'ensemble du poêle. Pour palier cet inconvénient, une solution consiste à faire circuler de l'air autour du corps de chauffe et à expulser l'air ainsi chauffé en dehors de l'habillage du poêle. De tels circuits d'air compliquent toutefois la conception du poêle. De plus, si cette solution crée une diffusion de chaleur par convection, elle n'améliore pas la diffusion de chaleur par rayonnement. Or, certains utilisateurs de poêle recherchent, avant tout, une bonne diffusion de chaleur par rayonnement.

Ensuite, pour limiter l'encombrement du poêle, la trémie de stockage et le corps de chauffe sont rapprochés le plus possible l'un de l'autre, et parfois même imbriqués l'un dans l'autre (voir le document US 5983885A précité), de manière à former un seul bloc, le plus compact possible. Ce bloc étant ensuite entouré d'un habillage. Ces contraintes compliquent également la conception du poêle.

Par ailleurs, et sans rapport direct avec ce qui précède, on notera que dans le poêle de la FIG 2 du document de brevet US 2014/0373827 A1, un conduit d'alimentation 52, qui renferme une vis sans fin 53, s'étend entre la trémie 51 et le foyer 34 du poêle pour alimenter le foyer 34 en granulés. L'air nécessaire à la combustion des granulés est soufflé par une soufflerie 63 dans une zone de circulation d'air 33 située sous le conduit d'alimentation 52. Les fumées émises lors de la combustion sont évacuées par un conduit de ventilation 45 raccordé à un ventilateur d'aspiration 61. Le conduit d'alimentation 52 et le conduit de ventilation 45 sont indépendants et distants l'un de l'autre. Ils sont fabriqués et assemblés séparément.

Le document EP0192502 divulgue un poêle à combustible solide selon le préambule de la revendication 1.

Il existe aujourd'hui un besoin pour un poêle à combustible solide d'un nouveau genre.

### PRESENTATION GENERALE

L'invention concerne un poêle à combustible solide ayant une nouvelle configuration en deux parties, tel que défini dans les revendications annexées. Ce poêle se présente sous la forme de deux modules séparés: un module d'alimentation renfermant l'espace de stockage du combustible, et un module de combustion renfermant le foyer du poêle. Un conduit d'alimentation s'étend entre ces deux modules et relie l'espace de stockage du module d'alimentation au module de combustion, pour alimenter le foyer en combustible solide. Ces deux modules sont séparés, i.e. éloignés l'un de l'autre, sans être enveloppés d'un habillage commun. Chaque module peut, toutefois, comprendre un habillage individuel.

En d'autres termes, par contraste avec les poêles conventionnels où l'espace de stockage du combustible et le foyer du poêle sont adjacents et entourés d'un habillage commun, les modules d'alimentation et de combustion proposés sont éloignés l'un de l'autre sans être entourés d'un habillage commun. Ainsi, les faces extérieures des modules d'alimentation et de combustion sont exposées à l'extérieur du poêle. En particulier, la face avant du module d'alimentation, qui fait face au module de combustion, est exposée à l'extérieur du poêle. De même, la face arrière du module combustion, qui fait face au module d'alimentation, est exposée à l'extérieur du poêle.

Une telle configuration de poêle favorise la diffusion de chaleur par rayonnement autour du module de combustion, en particulier lorsque celui-ci est dépourvu d'habillage (ou comprend un habillage partiel) autour du corps de chauffe et que le corps de chauffe est (au moins partiellement) directement exposé à l'extérieur. Cette configuration favorise également la conception du poêle puisque le module d'alimentation et le module de combustion peuvent être conçus et fabriqués séparément. En outre, un module d'alimentation peut être utilisé avec différents modules de combustion, et vice-versa.

Le présent exposé concerne également une gaine d'alimentation. Cette gaine peut être utilisée dans un poêle à combustible solide du type précité. Elle pourrait toutefois être utilisée avec d'autres types de poêle.

La gaine proposée peut être le seul élément de raccordement entre les modules de combustion et d'alimentation du poêle. En effet, cette gaine d'alimentation intègre, dans un ensemble unique, un conduit d'alimentation en granulés, un conduit d'admission d'air et un conduit d'évacuation des fumées.

Cette gaine d'alimentation pour poêle à combustible solide est raccordable entre un module d'alimentation en combustible solide et un module de combustion dudit combustible, et comprend:
- un conduit d'alimentation pour alimenter le module de combustion en combustible solide,
- un conduit d'admission d'air pour alimenter le module de combustion en air, et
- un conduit d'évacuation de fumées pour évacuer vers le module d'alimentation les fumées émises par la combustion.

Dans certains modes de réalisation, le conduit d'admission d'air de la gaine est raccordable entre un circuit d'air du module d'alimentation et une chambre d'admission d'air du module de combustion. Le conduit d'évacuation des fumées est raccordable entre un premier circuit d'évacuation des fumées ménagé dans le module de combustion et un deuxième circuit d'évacuation des fumées ménagé dans le module d'alimentation. Le conduit d'alimentation est raccordable entre un espace de stockage du combustible solide ménagé dans le module d'alimentation et un espace de combustion du combustible solide ménagé dans le module de combustion.

Dans certains modes de réalisation, au moins une partie du conduit d'admission d'air est intercalée entre le conduit d'alimentation et le conduit d'évacuation. Cette disposition des conduits permet de protéger le conduit d'alimentation, dans lequel circule le combustible solide, de la chaleur émise par le conduit d'évacuation dans lequel circulent les fumées chaudes. Afin de protéger le mieux possible le conduit d'alimentation contre la chaleur, le conduit d'admission d'air peut être entièrement intercalé entre le conduit d'alimentation et le conduit d'évacuation, et le conduit d'admission d'air peut entourer complètement le conduit d'alimentation.

Dans certains modes de réalisation, le conduit d'évacuation est situé à la périphérie extérieure de la gaine. En d'autres termes, le conduit d'évacuation s'étend dans la région extérieure de la gaine. Cette disposition permet de récupérer la chaleur émise par le conduit d'évacuation pour chauffer la pièce.

Dans certains modes de réalisation, afin de récupérer le maximum de chaleur possible, parmi lesdits conduits, seul le conduit d'évacuation s'étend dans la région extérieure de la gaine. En particulier, le conduit d'évacuation peut entourer complètement les autres conduits de la gaine et la paroi extérieure de la gaine peut être formée par la paroi extérieure du conduit d'évacuation.

Dans certains modes de réalisation, le conduit d'admission et le conduit d'évacuation sont disposés concentriquement, dans cet ordre, autour du conduit d'alimentation.

Une telle gaine d'alimentation permet de relier le module d'alimentation et le module de combustion du poêle par un raccord unique. Ceci facilite et simplifie le raccordement des deux modules lors de l'installation du poêle.

Le présent exposé concerne également un poêle à combustible solide comprenant:
- un module d'alimentation en combustible solide, dans lequel un combustible solide est stocké,
- un module de combustion dudit combustible, dans lequel le combustible est brulé, et
- une gaine d'alimentation du type précédemment décrit raccordée entre les deux modules.

Dans certains modes de réalisation, le combustible solide est sous forme de granulés. Par exemple, il peut s'agir de granulés en matériau naturel compacté, comme du bois ou des résidus de plante. Cependant, la solution proposée est compatible avec des combustibles solides présentant d'autres formes ou d'autres compositions.

Dans certains modes de réalisation, le module d'alimentation et le module de combustion du poêle de la présente description sont distants l'un de l'autre. Les deux modules sont séparés i.e. éloignés l'un de l'autre, et ne sont pas enveloppés d'un habillage commun, chaque module pouvant, toutefois, être entouré d'un habillage individuel.

Dans certains modes de réalisation, le module d'alimentation du poêle comprend un espace de stockage de combustible solide, le conduit d'alimentation de la gaine communiquant avec cet espace de stockage.

Dans certains modes de réalisation, le module d'alimentation comprend un circuit d'air communiquant avec le circuit d'admission d'air de la gaine. Le circuit d'air peut comprendre un système de soufflerie pour envoyer l'air vers le module de combustion, via le conduit d'admission d'air de la gaine.

Dans certains modes de réalisation, le module d'alimentation comprend un circuit d'évacuation des fumées communiquant avec le circuit d'évacuation des fumées de la gaine. Le circuit d'évacuation des fumées peut comprendre un système d'aspiration pour aspirer les fumées émises par la combustion, via le conduit d'évacuation de la gaine.

Le circuit d'évacuation des fumées peut comporter des éléments d'échange thermique, comme des ailettes, favorisant les échanges thermiques entre les fumées et une paroi externe du module d'alimentation. Ceci permet de récupérer la chaleur des fumées pour chauffer la pièce.

Les caractéristiques et avantages précités, ainsi que d'autres, apparaîtront à la lecture de la description détaillée qui suit, d'exemples de réalisation du poêle et de la gaine d'alimentation proposés. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention. Sur ces dessins, d'une figure (FIG) à l'autre, des éléments (ou parties d'élément) identiques sont repérés par les mêmes signes de référence.
La FIG 1 représente, en perspective, un exemple de poêle à granulé.
La FIG 2 est une vue de côté, selon la flèche II, du poêle de la FIG 1.
La FIG 3 est une vue de dessus, selon la flèche III, du poêle de la FIG 1.
La FIG 4 est une vue en coupe schématique, selon le plan de coupe IV-IV, du poêle de la FIG 3.
La FIG 5 est une vue en coupe axiale de la gaine d'alimentation de la FIG 4.
La FIG 6 est une vue en coupe transversale, selon le plan de coupe VI-VI, de la gaine d'alimentation de la FIG 4.

### DESCRIPTION DETAILLEE

Un exemple de réalisation d'une gaine d'alimentation et un exemple de poêle équipé d'une telle gaine sont décrits en détail ci-après, en référence aux dessins annexés. Ces exemples illustrent les caractéristiques et les avantages de l'invention. Il est toutefois rappelé que l'invention ne se limite pas à ces exemples.

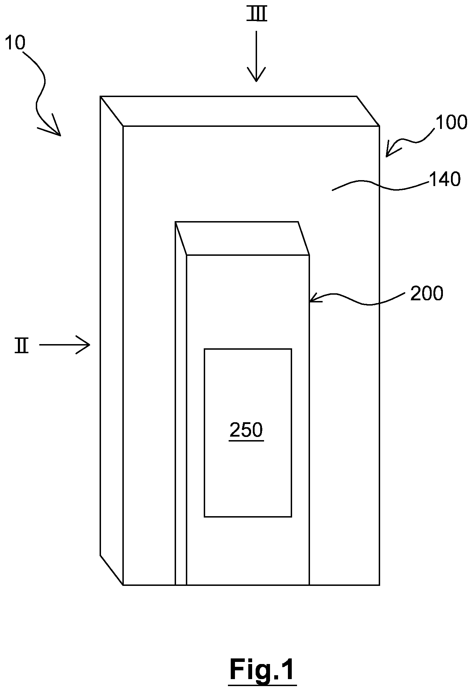

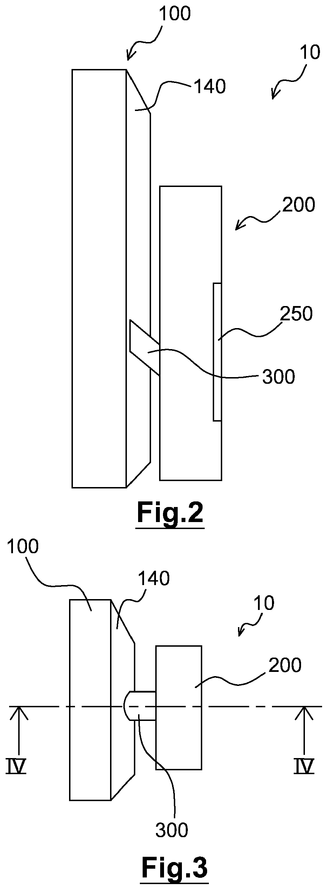

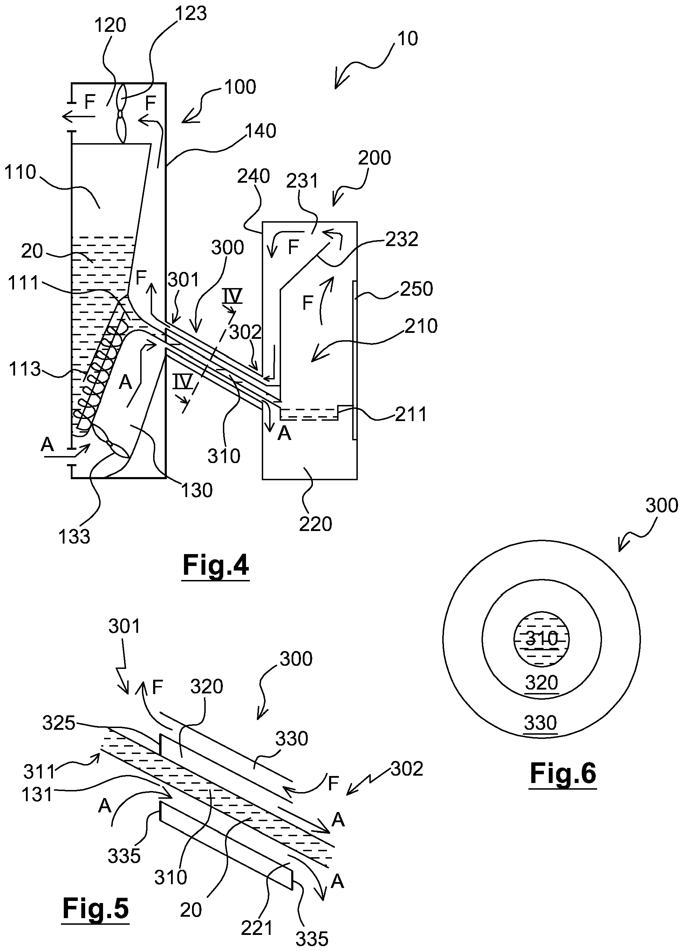

Un exemple de poêle à granulés 10 est représenté sur les FIGS 1 à 4. Ce poêle 10 comprend:
- un module d'alimentation 100 en combustible solide, dans lequel un combustible solide 20 (voir FIG 4) est stocké,
- un module de combustion 200 dudit combustible 20, dans lequel le combustible est brulé, et
- une gaine d'alimentation 300 s'étendant entre le module d'alimentation 100 et le module de combustion 200.

On notera que sur les dessins annexés, les proportions entre les modules 100, 200 et la gaine 300 ne sont pas nécessairement respectées. Par exemple, la profondeur (ou épaisseur) du module de combustion 200 peut être nettement plus importante que celle du module d'alimentation 100. De même, la longueur de la gaine 300 ou la section de celle-ci ont pu être exagérées. Les proportions entre les conduits qui composent la gaine 300 ne sont pas nécessairement respectées. Ces dessins visent avant tout à illustrer les principaux éléments constitutifs du poêle 10 et de la gaine 300.

Une première extrémité 301 de la gaine 300 est raccordée au module d'alimentation 100, et une deuxième extrémité 302 de la gaine (opposée à la première extrémité) est raccordée au module de combustion 200. La gaine 300 comprend un conduit d'alimentation 310 pour alimenter le module de combustion 200 en combustible solide 20, un conduit d'admission d'air 320 pour alimenter le module de combustion 200 en air de combustion, et un conduit d'évacuation de fumées 330 pour évacuer les fumées émises par la combustion vers le module d'alimentation 100.

Comme illustré sur la FIG 4, le module d'alimentation 100 comprend un espace de stockage 110 du combustible 20, un circuit d'air 130 et un circuit d'évacuation des fumées 120. L'espace de stockage 110 du module d'alimentation 100 est un réservoir de granulés, ou "pellets", qu'un utilisateur remplit plus ou moins régulièrement en fonction de ses besoins. Cet espace 110 a une ouverture de chargement (non représentée) disposée, par exemple, sur une face supérieure ou une face latérale du module d'alimentation 100. L'espace de stockage 110 est rempli par cette ouverture de chargement. L'espace de stockage 110 a également une ouverture de déchargement 111 (ou ouverture de sortie) raccordée à l'extrémité 311 du conduit d'alimentation 310 en granulés de la gaine 300. Les granulés peuvent ainsi être transférés de l'espace de stockage 110 vers le conduit d'alimentation 310. L'espace de stockage 110 peut comprendre un dispositif de dosage 113 des granulés, positionné à proximité de l'ouverture de déchargement 111. Le dispositif de dosage 113 des granulés assure le passage d'une certaine quantité de granulés par l'ouverture de déchargement 111. Dans l'exemple représenté sur la FIG 4, le dispositif de dosage 113 est une vis sans fin qui entraine, dans son pas de vis, les granulés jusqu'à l'ouverture 111. Selon un autre exemple (non représenté), le dispositif de dosage est une roue à godets.

Le module de combustion 200 comprend un foyer 210 et une chambre d'admission d'air 220 située sous le foyer 210. Une fenêtre vitrée 250 peut être prévue sur la face avant du module de combustion 200 pour permettre à l'utilisateur d'observer les flammes du foyer 210. Le foyer 210 du module de combustion 200 comprend un réceptacle, ou creuset 211, dans lequel une quantité de granulés est déposée pour y être brulée. Les granulés sont apportés vers le creuset par le conduit d'alimentation 310 de la gaine 300. Le conduit 310 est incliné depuis la sortie 111 de l'espace de stockage 110 vers le foyer 210 du module de combustion 200 de sorte que les granulés descendent par gravité dans ce conduit 310. Les granulés peuvent ainsi être chargés automatiquement dans le foyer 210 depuis l'espace de stockage 110, via le conduit d'alimentation 310.

Pour permettre la combustion des granulés dans le foyer 210, de l'air arrive, via la gaine 300, jusqu'à la chambre d'admission d'air 220 située sous le foyer 210. Le creuset 211 est percé de trous permettant à l'air contenu dans la chambre 220 d'alimenter le foyer 210. L'air est amené jusqu'à la chambre d'admission d'air 220 via le conduit d'admission d'air 320 de la gaine 300. Ce conduit d'admission d'air 320 est raccordé, d'une part, au circuit d'air 130 du module d'alimentation 100 et, d'autre part, à la chambre d'admission d'air 220 du module de combustion 200. L'air arrivant dans le circuit 130 peut être un air ambiant prélevé dans la pièce où est disposé le poêle, ou bien un air prélevé à l'extérieur de cette pièce. L'air transite par le circuit d'air 130 du module d'alimentation et le conduit d'admission d'air 320 de la gaine 300 avant d'atteindre le module de combustion 200. Le circuit d'air 130 du module d'alimentation 100 communique avec le conduit d'admission d'air 320 de la gaine 300, sans toutefois communiquer avec les autres conduits 310, 330 de cette gaine. Pour assurer une circulation optimale de l'air vers le module de combustion 200, un système de soufflerie 133 peut être installé dans le circuit d'air 130. Le système de soufflerie 133 est, par exemple, un ventilateur à hélice. La circulation de l'air est représentée schématiquement par les flèches A sur les figures 4 et 5.

La combustion des granulés dans le foyer 210 génère des fumées dans le module de combustion 200. Ces fumées sont ensuite évacuées vers le module d'alimentation 100. L'évacuation des fumées vers le module d'alimentation 100 se fait via un premier circuit d'évacuation 231 ménagé dans le module de combustion 200, puis via le conduit d'évacuation des fumées 330 de la gaine 300, et enfin via un deuxième circuit d'évacuation 120 ménagé dans le module d'alimentation 100. Le premier circuit d'évacuation 231 est, par exemple, délimité par une ou plusieurs cloisons internes 232 du module de combustion et par une ou plusieurs parois externes, dont une paroi arrière 240, de ce module. Le circuit d'évacuation 231 communique avec le conduit d'évacuation des fumées 330 de la gaine 300, sans toutefois communiquer avec les autres conduits 310, 320 de cette gaine.

Le conduit d'évacuation des fumées 330 est raccordé au circuit d'évacuation des fumées 120 du module d'alimentation 100. Le circuit d'évacuation des fumées 120 est formé, par exemple, entre l'espace de stockage 110 du combustible et une paroi avant 140 du module d'alimentation 100. Cette paroi avant 140 fait face au module de combustion 200. Une couche d'isolant thermique peut être prévue entre l'espace de stockage 110 et le circuit d'évacuation des fumées 120, pour protéger le combustible de la chaleur. Le circuit d'évacuation des fumées 120 est ensuite raccordé à un conduit de cheminée, ou équivalent, permettant d'évacuer les fumées à l'extérieur du local. Pour faciliter l'évacuation des fumées, un système d'aspiration peut être installé dans le premier et/ou le deuxième circuit d'évacuation des fumées 231, 120. Dans l'exemple de la FIG 4, un système d'aspiration 123 est disposé dans le circuit d'évacuation 120. Le système d'aspiration 123 est, par exemple, un ventilateur à hélice.

La gaine d'alimentation 300, qui s'étend entre le module de combustion 200 et le module d'alimentation 100, est représentée sur la FIG 5 en coupe axiale (i.e. suivant un plan de coupe contenant l'axe central de la gaine) et sur la FIG 6 en coupe transversale ou radiale (i.e. suivant un plan de coupe sensiblement perpendiculaire à l'axe central de la gaine). Comme illustré sur ces figures, la gaine d'alimentation s'étend axialement entre la première extrémité 301 raccordée au module d'alimentation 100, et la deuxième extrémité 302 raccordée au module de combustion 200. Ces première et deuxième extrémités 301, 302 sont les extrémités axiales de la gaine 300. L'ensemble des conduits 310, 320, 330 s'étendent entre ces extrémités axiales et débouchent au niveau des ces extrémités 301, 302. En d'autres termes, aucun des conduits 310, 320, 330 ne débouche sur la surface latérale périphérique de la gaine. Ainsi, l'entrée du conduit d'admission d'air 320 se situe au niveau de la première extrémité 301 et la sortie du conduit d'admission d'air 320 se situe au niveau de la deuxième extrémité 302. De même, l'entrée du conduit d'alimentation 310 se situe au niveau de la première extrémité 301 et la sortie du conduit d'alimentation 310 se situe au niveau de la deuxième extrémité 302. Inversement, la sortie du conduit d'évacuation des fumées 330 se situe au niveau de la première extrémité 301 et l'entrée du conduit d'évacuation des fumées 330 se situe au niveau de la deuxième extrémité 302.

Dans l'exemple, la direction axiale de la gaine 300 correspond à la direction générale de déplacement du combustible solide dans la gaine 300. La direction axiale de la gaine 300 pourrait également être sensiblement parallèle à la direction générale de déplacement du combustible solide dans la gaine 300. Dans l'exemple, le conduit d'alimentation 310, le conduit d'admission d'air 320 et le conduit d'évacuation des fumées 330 s'étendent tous suivant la direction axiale de la gaine 300, entre les première et deuxième extrémités axiales 301, 302 de celle-ci.

Le conduit d'alimentation 310 en granulés est situé au centre de la gaine, le conduit 330 d'évacuation des fumées est situé à la périphérie extérieure de la gaine 300, et le conduit d'admission d'air 320 est intercalé entre le conduit d'alimentation 310 et le conduit d'évacuation 330. Dans cet exemple, le conduit d'alimentation 310 est complètement entouré par le conduit d'admission d'air 320 lui-même complètement entouré par le conduit d'évacuation 330. Plus particulièrement, les trois conduits 310, 320, 330 peuvent être concentriques. Les trois conduits 310, 320, 330, peuvent être cylindriques et, par exemple, de section circulaire comme représenté sur la FIG. 6.

Dans cet exemple, la paroi extérieure du conduit d'alimentation 310 est également la paroi intérieure du conduit d'admission d'air 320, la paroi extérieure du conduit d'admission d'air 320 est également la paroi intérieure du conduit d'évacuation 330, et la paroi extérieure du conduit d'évacuation 330 est également la paroi extérieure de la gaine 300.

La gaine 300 permet:
- le transport des granulés 20 depuis l'espace de stockage 110 du module d'alimentation 100 jusqu'au foyer 210;
- la circulation d'air depuis le circuit d'air 130 du module d'alimentation 100 jusqu'à la chambre d'admission d'air 220 située sous le foyer 210; et
- la circulation des fumées depuis le circuit d'évacuation 231 du module de combustion 200 jusqu'au circuit d'évacuation 120 du module d'alimentation 100.

La configuration de cette gaine permet de récupérer la chaleur émise par le conduit d'évacuation 330 (chauffé par les fumées chaudes évacuées) pour chauffer la pièce dans laquelle est disposé le poêle 100, tout en protégeant le combustible solide 20 circulant dans le conduit d'alimentation 310 de cette chaleur grâce au conduit d'admission d'air 320 qui forme une couche d'isolation thermique entre le conduit d'alimentation 310 et le conduit d'évacuation des fumées 330.

Comme illustré sur les FIGS 4 et 5, la gaine 300 peut comporter, à ses extrémités 301, 302, des cloisons 325, 335, qui ferment partiellement l'entrée/la sortie du conduit d'admission d'air 320 ou l'entrée/la sortie du conduit d'évacuation des fumées 330, de manière à éviter que les fumées n'entrent dans le circuit d'air, ou que de l'air n'entre dans le circuit de fumée. En particulier, dans l'exemple représenté, le conduit d'admission d'air 320 est équipé, dans sa partie supérieure et du côté du module d'alimentation 100, d'une cloison 325 empêchant l'introduction d'air dans le circuit d'évacuation des fumées 120 (ou, inversement, l'introduction de fumées dans le conduit d'admission d'air 320). Par ailleurs, le conduit d'évacuation des fumées 330 est muni, dans sa partie inférieure et des deux côtés, de cloisons 335 empêchant l'introduction des fumées dans la chambre d'admission d'air 220 du module de combustion 200 et dans le circuit d'air 130 du module d'alimentation 100 (ou, inversement, l'introduction d'air dans le conduit d'évacuation des fumées 330). Bien entendu, d'autres configurations ou positions pourraient être retenues pour les cloisons 325, 335, et d'autres systèmes peuvent être utilisés pour éviter les mélanges d'air et de fumées au niveau des extrémités 301, 302 de la gaine 300.

La gaine 300 peut être installée entre le module de combustion 200 et le module d'alimentation 100 par emboitement, clipsage, soudage, brasage ou tout autre système de fixation approprié. La gaine 300 constitue le seul élément de raccordement entre les deux modules 100, 200. Lorsque ces modules sont distants l'un de l'autre et qu'ils ne sont pas entourés par un habillage commun, comme dans l'exemple représenté, la gaine 300 constitue le seul lien physique entre les modules 100, 200. Cette gaine 300 constitue elle-même une pièce unique rassemblant un conduit d'alimentation en combustible solide, un conduit d'admission d'air et un conduit d'évacuation des fumées. En plus des avantages déjà évoqués, une telle configuration permet de concevoir des poêles avec des formes nouvelles et des lignes épurées.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention telle que définie dans les revendications qui suivent.

## Revendications

1. Poêle à combustible solide comprenant:
- un module d'alimentation (100) en combustible solide, dans lequel un combustible solide (20) est stocké,
- un module de combustion (200) dudit combustible solide (20), dans lequel le combustible solide (20) est brulé, et
- une gaine d'alimentation (300) raccordée entre le module d'alimentation (100) et le module de combustion (200), cette gaine d'alimentation comprenant :
- un conduit d'alimentation (310) pour alimenter le module de combustion (200) en combustible solide, et
- un conduit d'admission d'air (320) pour alimenter le module de combustion (200) en air,
**caractérisé en ce que** :
- le conduit d'admission d'air (320) est raccordable entre un circuit d'air (130) du module d'alimentation et une chambre d'admission d'air (220) du module de combustion,
- la gaine d'alimentation comprend, en outre, un conduit d'évacuation des fumées (330) pour évacuer vers le module d'alimentation (100) les fumées émises par la combustion, le conduit d'évacuation des fumées (330) étant raccordable entre un premier circuit d'évacuation des fumées (231) ménagé dans le module de combustion et un deuxième circuit d'évacuation (120) ménagé dans le module d'alimentation (100), et
- au moins une partie du conduit d'admission d'air (320) est intercalée entre le conduit d'alimentation (310) et le conduit d'évacuation des fumées (330).

2. Poêle selon la revendication 1, dans lequel le conduit d'évacuation des fumées (330) est situé à la périphérie extérieure de la gaine (300).

3. Poêle selon la revendication 2, dans lequel, parmi lesdits conduits, seul le conduit d'évacuation des fumées (330) s'étend dans la région extérieure de la gaine (300).

4. Poêle selon l'une quelconque des revendications 1 à 3, dans lequel le conduit d'admission d'air (320) et le conduit d'évacuation des fumées (330) sont disposés concentriquement, dans cet ordre, autour du conduit d'alimentation (310).

5. Poêle selon l'une quelconque des revendications 1 à 4, dans lequel le module d'alimentation (100) et le module de combustion (200) sont distants l'un de l'autre.

6. Poêle selon l'une quelconque des revendications 1 à 5, dans lequel le module d'alimentation (100) comprend un espace de stockage (110) de combustible solide, le conduit d'alimentation (310) de la gaine (300) communiquant avec cet espace de stockage (110).

7. Poêle selon l'une quelconque des revendications 1 à 6, dans lequel le module d'alimentation (100) comprend un circuit d'air (120) communiquant avec le conduit d'admission d'air (320) de la gaine.

8. Poêle selon la revendication 7, dans lequel le circuit d'air (120) comprend un système de soufflerie (133) pour envoyer de l'air vers le module de combustion (200), via le conduit d'admission d'air (320) de la gaine.

9. Poêle selon l'une quelconque des revendications 1 à 8, dans lequel le module d'alimentation (100) comprend un circuit d'évacuation des fumées (120) communiquant avec le conduit d'évacuation des fumées (330) de la gaine.

10. Poêle selon la revendication 9, dans lequel le circuit d'évacuation des fumées (120) comprend un système d'aspiration (123) pour aspirer les fumées émises par la combustion, via le conduit d'évacuation (330) de la gaine.

## Patentansprüche

1. Festbrennstoffofen aufweisend:
- ein Zufuhrmodul (100) für Festbrennstoff, in dem ein Festbrennstoff (20) gelagert ist,
- ein Verbrennungsmodul (200) für diesen Festbrennstoff (20), in dem der Festbrennstoff (20) verbrannt wird, und
- einen Zufuhrkanal (300), der zwischen dem Zufuhrmodul (100) und dem Verbrennungsmodul (200) angeschlossen ist, wobei der Zufuhrkanal aufweist:
- eine Zufuhrleitung (310) zum Versorgen des Verbrennungsmoduls (200) mit Festbrennstoff, und
- eine Lufteinlassleitung (320) zum Versorgen des Verbrennungsmoduls (200) mit Luft,
**dadurch gekennzeichnet, dass**:
- die Lufteinlassleitung (320) zwischen einem Luftkreislauf (130) des Zufuhrmoduls und einer Lufteinlasskammer (220) des Verbrennungsmoduls angeschlossen werden kann,
- der Zufuhrkanal ferner eine Rauchabfuhrleitung (330) zum Abführen des durch die Verbrennung abgegebenen Rauchs in Richtung des Zufuhrmoduls (100) ausweist, wobei die Rauchabfuhrleitung (330) zwischen einem in dem Verbrennungsmodul vorgesehenen ersten Rauchabfuhrkreislauf (231) und einem in dem Zufuhrmodul (100) vorgesehenen zweiten Abfuhrkreislauf (120) angeschlossen werden kann, und
- mindestens ein Abschnitt der Lufteinlassleitung (320) zwischen der Zufuhrleitung (310) und der Rauchabfuhrleitung (330) liegt.

2. Ofen nach Anspruch 1, wobei sich die Rauchabfuhrleitung (330) am Außenumfang des Kanals (300) befindet.

3. Ofen nach Anspruch 2, wobei sich unter diesen Leitungen lediglich die Rauchabfuhrleitung (330) in dem Bereich außerhalb des Kanals (300) erstreckt.

4. Ofen nach einem der Ansprüche 1 bis 3, wobei die Lufteinlassleitung (320) und die Rauchabfuhrleitung (330) in dieser Reihenfolge konzentrisch um die Zufuhrleitung (310) herum angeordnet sind.

5. Ofen nach einem der Ansprüche 1 bis 4, wobei das Zufuhrmodul (100) und das Verbrennungsmodul (200) voneinander beabstandet sind.

6. Ofen nach einem der Ansprüche 1 bis 5, wobei das Zufuhrmodul (100) einen Lagerraum (110) für Festbrennstoff aufweist, wobei die Zufuhrleitung (310) des Kanals (300) mit diesem Lagerraum (110) kommuniziert.

7. Ofen nach einem der Ansprüche 1 bis 6, wobei das Zufuhrmodul (100) einen Luftkreislauf (120) aufweist, der mit der Lufteinlassleitung (320) des Kanals kommuniziert.

8. Ofen nach Anspruch 7, wobei der Luftkreislauf (120) ein Gebläsesystem (133) aufweist, um Luft über die Lufteinlassleitung (320) des Kanals in Richtung des Verbrennungsmoduls (200) zuzuführen.

9. Ofen nach einem der Ansprüche 1 bis 8, wobei das Zufuhrmodul (100) einen Rauchabfuhrkreislauf (120) aufweist, der mit der Rauchabfuhrleitung (330) des Kanals kommuniziert.

10. Ofen nach Anspruch 9, wobei der Rauchabfuhrkreislauf (120) ein Ansaugsystem (123) aufweist, um den durch die Verbrennung abgegebenen Rauch über die Abfuhrleitung (330) des Kanals anzusaugen.

## Claims

1. A solid fuel stove comprising:
- a solid fuel supply module (100), wherein a solid fuel (20) is stored,
- a combustion module (200) for said solid fuel (20), wherein the solid fuel (20) is burnt, and
- a supply duct (300) connected between the supply module (100) and the combustion module (200), said supply duct comprising:
- a supply pipe (310) for supplying solid fuel to the combustion module (200), and
- an air-intake pipe (320) for supplying air to the combustion module (200),
**characterized in that**:
- the air-intake pipe (320) is connectable between an air circuit (130) of the supply module and an air-intake chamber (220) of the combustion module,
- the supply duct further comprises a smoke-discharge pipe (330) for discharging the smoke emitted by the combustion towards the supply module (100), the smoke-discharge pipe (330) being connectable between a first smoke-discharge circuit (231) provided in the combustion module and a second discharge circuit (120) provided in the supply module (100), and
- at least part of the air-intake pipe (320) is interposed between the supply pipe (310) and the smoke-discharge pipe (330).

2. A stove as claimed in claim 1, wherein the smoke-discharge pipe (330) is located at the outer periphery of the duct (300).

3. A stove according to claim 2, wherein, among said pipes, only the smoke-discharge pipe (330) extends into the outer region of the duct (300).

4. A stove according to any one of claims 1 to 3, wherein the air-intake pipe (320) and the smoke-discharge pipe (330) are arranged concentrically, in that order, around the supply pipe (310).

5. A stove according to any one of claims 1 to 4, wherein the supply module (100) and the combustion module (200) are spaced apart from each other.

6. A stove according to any one of claims 1 to 5, wherein the supply module (100) comprises a storage space (110) for solid fuel, the supply pipe (310) of the duct (300) communicating with said storage space (110).

7. A stove according to any one of claims 1 to 6, wherein the supply module (100) comprises an air circuit (120) communicating with the air-intake pipe (320) of the duct.

8. A stove according to claim 7, wherein the air circuit (120) comprises a blower system (133) for supplying air to the combustion module (200), via the air-intake pipe (320) of the duct.

9. A stove according to any one of claims 1 to 8, wherein the supply module (100) comprises a smoke-discharge circuit (120) communicating with the smoke-discharge pipe (330) of the duct.

10. A stove according to claim 9, in which the smoke-discharge circuit (120) comprises a suction system (123) for sucking in the smoke emitted by combustion, via the smoke-discharge pipe (330) of the duct.
